# EUROPÄISCHE PATENTANMELDUNG

(11) **EP 0 732 707 A2**
(43) Veröffentlichungstag der Anmeldung: **18.09.1996**
(21) Anmeldenummer: 96102937.8
(22) Anmeldetag: 28.02.1996
(51) Int. Cl.: H01C 7/105

(54) **Schutzelement für einen elektrochemischen Speicher sowie Verfahren zu dessen Herstellung**

(30) Priorität: 14.03.1995 DE 19509075
(71) Anmelder: DAIMLER-BENZ AKTIENGESELLSCHAFT, D-70567 Stuttgart (DE)
(72) Erfinder: Maly-Schreiber, Martha, Dr., A-2340 Mödling (AT); van Zyl, Arnold, Dr., 89073 Ulm (DE); Ritter, Josef, 80339 München (DE); Hilpert, Reinhold, Dr., 82272 Moorenweis (DE)

(57) **Zusammenfassung**

Die Erfindung betrifft ein Schutzelement für einen elektrochemischen Speicher mit mindestens einer Einzelzelle sowie ein Verfahren zu dessen Herstellung. Das Schutzelement ist aus körnigem Varistormaterial gefertigt, wobei der mittlere Durchmesser der Körner des Varistormaterials kleiner als 1 µm, insbesondere kleiner 250 nm ist und wobei bei über 60% der Körner des Varistormaterials die Korngröße um maximal 40% von ihrem statischen Mittelwert abweicht. Damit derartige Körner hergestellt werden können, wird eine Dispersion zur Bildung von biochemischen Hohlkörpern angesetzt, die einen Innendurchmesser gemäß obigen Anforderungen aufweisen. Der Dispersion werden Salze beigegeben, die sich in der Dispersion unter Bildung von Vorprodukt-Ion einer ein Vorprodukt für ein Varistormaterial bildende Substanzen lösen, wobei das Vorprodukt-Ion einer ein Vorprodukt für ein Varistormaterial bildenden Substanz ein Vorprodukt-Ion eines für das Varistormaterial benötigten Elements oder einer entsprechenden Verbindung ist. Die Vorprodukt-Ionen einer ein Vorprodukt für ein Varistormaterial bildende Substanzen werden im geschlossenen Hohlraum der Hohlkörper angeordnet, wobei mit ihnen die Körner des Varistormaterials oder eines formentsprechenden Vorprodukts gebildet werden, die durch Entfernung der Hülle der Hohlkörper freigesetzt werden.

## Beschreibung

Die Erfindung betrifft ein Schutzelement für einen elektrochemischen Speicher gemäß dem Oberbegriff des Anspruchs 1 bzw. ein Verfahren zu dessen Herstellung gemäß dem Oberbegriff des Anspruchs 6, wie beides aus dem gattungsbildend zugrundegelegten älteren Recht DE-P 44 09 268.7-45 als bekannt hervorgeht.

Die DE-P 44 09 268.7-45 offenbart einen elektrochemischen Speicher mit mehreren seriell miteinander verschalteten Einzelzellen. Jede der Einzelzellen weist zwei räumlich getrennte Elektroden auf, zwischen denen zumindest ein Elektrolyt und Schutzelement angeordnet ist. Das aus Varistormaterial bestehende Schutzelement dient zum einen der Sicherung des Anstandes der Elektroden zueinander und zum anderen stellt es einen Überladungsschutz dar. Der Schutz gegen Überladung funktioniert dadurch, daß das einen nichtlinearen Widerstand aufweisende Varistormaterial unterhalb einer bestimmten Spannung als Isolator wirkt und oberhalb dieser Spannung leitend wird; d.h. das Schutzelement weist ähnlich einer Z-Diode eine Durchbruchsspannung auf, bei der der Wechsel von Isolator- nach Leitereigenschaft erfolgt. Die kritische Spannung ist hierbei sinnvollerweise kleiner oder gleich der Überladungs- bzw. Zerstörungs-Spannung, ab der ein Element einer Einzelzelle, zumeist der Elektrolyt einen irreparablen Schaden erleidet. Der Einsatz eines Varistormaterials als Schutzelement ist allerdings aufgrund der schwierigen Einstellung der Durchbruchsspannung kritisch, da sie i.a. eine Funktion der Schichtdicke des Varistormaterials ist. Die Schichtdicke des Schutzelementes geht aber wiederum direkt in die Baugröße der Einzelzelle ein, weshalb mit Varistormaterialien geschützte Bauweisen einen erheblichen Bauraum aufweisen.

Aus dem Fachartikel "Synthesis of Submicrometer crystals of Aluminum Oxide by Aqueous Intravesicular Precipitation" in Journal of Colloid and Interface Science, Vol. 135. No. 2, 15. März 1990, Seite 531 - 538, ist ein Verfahren zur Herstellung von Körnern aus Aluminiumoxid bekannt, die einen mittleren Durchmesser von etwa 10 - 20 nm aufweisen. Zur Herstellung dieser Körner wird eine Aluminiumsalzlösung in Phospolipidvesikel eingeschlossen, die Al-Ionen im Außenmedium entfernt und durch eine starke Erhöhung des pH-Wertes die Präzipitation von Aluminiumoxid in den von den Vesikeln gebildeten Hohlräumen ausgelöst. Nach erfolgter Bildung des gewünschten Stoffes werden die Vesikel entfernt und die Körner liegen in gewünschter Größenordnung vor. Des weiteren sind noch andere biochemische Hohlkörper wie z.B. Micellen und Ferritin als Matrizen für die Herstellung solcher Vesikel beschrieben.

Aus der US 38 21 686 und der EP 50 091 sind Schutzelemente aus körnigem Varistormaterial bekannt, die direkt zwischen zwei Leitern angeordnet sind und deshalb ggf. sehr klein ausgebildet sein müssen.

Aus der DE 37 21 754 A1 ist ein Schutzelement für einen elektrochemischen Speicher mit mindestens einer Einzelzelle bekannt, wobei eine jede Einzelzelle zwei räumlich getrennte Elektroden aufweist, zwischen denen ein Elektrolyt und ein aus Varistormaterial bestehendes Schutzelement angeordnet ist. Das Schutzelement besteht aus Varistoren, die regelmäßig aus körnigem Varistormaterial bestehen und die - aufgrund der Varistoreigenschaften - eine Überladung verhindern.

Aus der DE 42 29 437 C1 ist ein elektrochemischer Speicher bekannt, dessen Elektroden mittels Abstandhalter voneinander separiert sind.

Aus der 36 19 620 A1 sind aus feinkörnigem Varistormaterial bestehende Varistorkörper bekannt. Des weiteren ist hieraus der Zusammenhang bekannt, daß aufgrund der pro Längeneinheit zahlreicheren Korngrenzen Varistoren geringerer Dicke bzw. mit kleinerem Volumen verwendbar sind.

Aus der DE 43 20 836 A1, der DE 38 26 356 A1 und der DE 25 26 137 C2 ist die Herstellung von Varistormaterialien bekannt. In diesen Schriften werden unterschiedliche Ausgangsstoffe und unterschiedlichen Vorprodukte sowie deren Weiterverarbeitung offenbart.

Aus der DE 43 20 836 A1 ist insbesondere bekannt, feinteilige Mischoxidpulver herzustellen, deren Korngröße meist unter 1 µm liegt.

Die DE 38 26 356 A1 offenbart insbesondere die Gleichmäßigkeit der Teilchengröße in engen Grenzen bei insgesamt niedriger Teilchengröße unter 1 µm.

Aus der DE 25 26 137 C2 ist die Ausfällung von Vorprodukten von Varistormaterialien bekannt.

Aus der DE-AS 10 46 153 sind körnige Varistormaterialien bekannt, bei denen in Bereichen außerhalb aneinanderstoßender Korngrenzen ein Bindemittel vorgesehen ist, das die Körner gegeneinander preßt.

Aus der DE 34 09 815 A1 ist die poröse Ausgestaltung von Keramikmaterialien bekannt.

Die Aufgabe der Erfindung ist es, das gattungsgemäß zugrundegelegte Schutzelement dahingehend weiterzuentwickeln, daß damit geschützte Einzelzellen einen möglichst geringen Bauraum aufweisen, wobei das Schutzelement hinsichtlich des Bauraumes und hinsichtlich der Durchbruchsspannung mit möglichst geringen Fertigungstoleranzen gefertigt werden kann. Des weiteren ist es Aufgabe der Erfindung ein Verfahren zur Herstellung der erfindungsgemäßen Schutzelemente zu entwickeln.

Die Aufgabe wird bei einem gattungsgemäß zugrundegelegten Schutzelement mit den kennzeichnenden Merkmalen des Anspruchs 1 bzw. bzgl. des gattungsgemäß zugrundegelegten Verfahrens mit den kennzeichnenden Verfahrensschritten des Anspruchs 6 gelöst. Durch Herstellung des das Schutzelement bildenden körnigen Varistormaterials unter Zuhilfenahme von biochemikalischen Hohlkörpern, insbesondere von Vesikeln, können die Körner des Varistormaterials unterhalb des µm-Bereiches und sogar innerhalb enger Intervallgrenzen ausgebildet werden. Durch die geringe Korngröße der Körner des Varistormaterials und die Herstellung der Körner über ein das Varistormaterial durch Calzinieren bildendes Vorprodukt in engen Intervallgrenzen und mit wenigstens grob der Kugelform entsprechender Gestalt derselben kann zum einen die sich berührende Oberfläche der einzelnen Körner des Varistormaterials und damit die Durchbruchsspannung des Schutzelements recht genau eingestellt und zum anderen die Schichtdicke der Schutzelemente gering gehalten werden. Vorteilhafterweise kann ferner aufgrund des Verfahrens mittels der biochemikalischen Hohlkörper die Korngröße des Vorprodukts und damit des Varistormaterials vom nm-Bereich bis hin zum µm-Bereich praktisch beliebig variiert werden. Dadurch ist günstigerweise der Einsatz in Einzelzellen unterschiedlicher Konfiguration hinsichtlich der Schichtdicke ermöglicht.

Zweckmäßige Ausgestaltungen der Erfindung sind den Unteransprüchen entnehmbar. Im übrigen wird die Erfindung anhand von in den Figuren dargestellten Ausführungsbeispielen erläutert. Dabei zeigt
- Fig. 1: einen Ausschnitt aus einem elektrochemischen Speicher mit mehreren Einzelzellen,
- Fig. 2: einen Ausschnitt eines mit Körnern aus Varistormaterial gefertigten Schutzelements einer Einzelzelle,
- Fig. 3: eine schematische Darstellung einer Dispersion mit flüssige Phase und mit Lipiden,
- Fig. 4: die Dispersion nach Figur 3 mit einem aus den Lipiden gebildeten Vesikel,
- Fig. 5: das Vesikel nach Figur 4 mit einem in seinem Inneren angeordnetem Korn aus Varistormaterial und
- Fig. 6: ein Korn, bei dem die Hülle des Vesikels nach Figur 5 entfernt wurde.

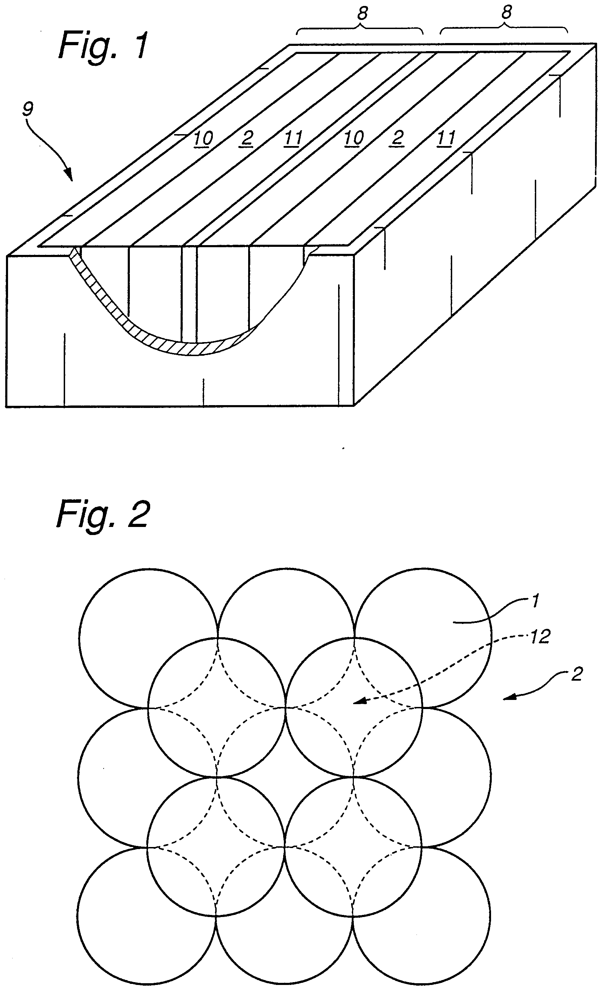

In Figur 1 ist eine Einzelzelle 8 in Plattenbauweise eines elektrochemischen Speichers 9 dargestellt, wie sie bspw. in Batterien, Akkumulatoren und dergleichen verwendbar ist. Die Erfindung ist nicht auf derartige Einzelzellen 8 beschränkt, sondern in einfacher Weise auch auf andere Batterien, bspw. mit geschichteten oder gewickelten Elektroden und dgl. übertragbar.

Die Einzelzelle 8 nach Figur 1 weist u.a. zwei ungleichnamige und räumlich voneinander getrennte Elektroden 10, 11 auf, zwischen die ein Schutzelement 2 einer Einzelzelle 8 eingelegt ist. Zur Sicherung der Einzelzelle 8 weist das Schutzelement 2 spätestens bei einer Schaltschwelle, die maximal einer Durchbruchs- bzw. Zerstörungsspannung einer Einzelzelle 8 entspricht, eine gute elektrische Leitfähigkeit auf, so daß ab der Schaltschwelle die beiden Elektroden 10, 11 über das Schutzelement 2 elektrisch leitend verbunden sind. Unterhalb der Schaltschwelle, also bei Betriebsspannung, stellt das Schutzelement 2 einen Isolator dar. Als Schaltschwelle wird hierbei diejenige Spannung bezeichnet, die maximal gleich der Zerstörungsspannung der Einzelzelle 8 ist und bei der sich der Widerstand des Schutzelements 2 von hochohmigen Werten, also von einem elektrisch isolierenden Zustand, hin zu niederohmigen Werten, also zu einem elektrisch leitenden Zustand, ändert. Damit an den Elektroden 10, 11 der Einzelzelle 8 im Betrieb und damit bei isolierendem Zustand des Schutzelements 2 eine elektrische Spannung abgegriffen werden kann, ist in den Hohlräumen 12 des porösen Schutzelements 2 zumindest teilweise der Elektrolyt der Einzelzelle 8 angeordnet.

Durch diese Konstruktion ist es auf einfache Weise möglich, ohne zusätzliches Bauteil und ggf. sogar ohne Gewichtszuwachs einen Zerstörungs- bzw. Überladungsschutz für Einzelzellen 8 zu realisieren, da das aus Körnern 1 aus Varistormaterial gefertigte Schutzelement 2 unterhalb seiner Schaltschwelle hochohmig ist und daher gleichzeitig auch als Separator verwandt werden kann.

Bei dem Schutzelement 2 ist, wie aus dem eben Aufgeführten einfach ersichtlich ist, die Einstellung der Schaltschwelle von zentraler Bedeutung. Durch die Erfindung kann nunmehr die Schaltschwelle, die bisher über die Schichtdicke des Schutzelements 2 erfolgte, in engen Grenzen, mit hoher Reproduzierbarkeit und dadurch geringem Ausschuß hergestellt werden.

Insbesondere ist hierbei noch von Vorteil, daß aufgrund der geringen Korngröße der Körner 1 das Schutzelement 2 mit einer geringen Dicke hergestellt werden kann. Dies führt zu kleineren Außenmaßen eines elektrochemischen Speichers 9, da das Schutzelement 2 in der vorliegenden Konstruktion der Einzelzelle 8 zur Breite der Einzelzelle 8 und dadurch bei elektrochemischen Speichern 9 mit mehreren Einzelzellen 8 auch entsprechend zur Gesamtbreite des elektrochemischen Speichers 9 beiträgt.

In Figur 2 ist ein vergrößerter Ausschnitt des Schutzelements 2 für die Einzelzelle 8 nach Figur 1 dargestellt. Das Schutzelement 2 ist aus einzelnen, insbesondere etwa kugelförmigen Körnern 1 aus einem Varistormaterial aufgebaut, die an ihren Kontaktflächen miteinander verbunden sind. Die Verbindung kann bspw. durch Sintern erfolgen. Auf diese Weise können Körper mit unterschiedlicher aber definierter Dichte und Porosität auf einfache Weise hergestellt werden.

Der mittlere Durchmesser der Körner 1 aus Varistormaterial ist kleiner als 1µm, insbesondere kleiner als 250 nm, wobei von der Gesamtheit aller Körner 1 aus Varistormaterial zumindest 60 % von ihnen innerhalb eines Intervalls angeordnet sind, das um maximal 40% von ihrem statistischen Mittelwert abweicht. Günstiger ist es, wenn die Körner 1 bzgl. Ihres Volumens um maximal 10% voneinander abweichen.

Aufgrund der sich etwa entsprechenden Maße und der Gestalt der annähernd eine Kugelform aufweisenden Körner 1, können sich die Körner 1 vor dem Verbinden miteinander in einer dichtesten Kugelpackung, der sogenannten kubisch raumzentrierten Kugelpackung anordnen, wie es in der Figur 2 mit zwei übereinanderliegenden Schichten von Körnern 1 in Aufsicht idealisiert dargestellt ist.

Dies bedeutet für das Schutzelement 2, daß hier in einer aus der Kristallphysik abstrahierend entnommenen Einheitszelle immer ein in engen Grenzen definierter Hohlraum 12 und ebenso eine definierte freie Oberfläche und damit auch eine definierte Kontaktoberfläche zwischen einzelnen Körnern 1 vorliegt, wobei die im kristallphysikalischen Modell der Einheitszelle kugelförmig postulierten Atome der Einheitszelle einfach mit den zumindest in grober Näherung kugelförmigen Körnern 1 des Varistormaterials vertauscht sind, so daß durch ein periodisches Aneinanderreihen der Einheitszelle die mikroskopische Struktur des Schutzelements 2 darstellbar ist.

Das Vorliegen einer derartigen Einheitszelle bei dem Aufbau des Schutzelements 2 ist u.a. daher günstig, da die Kontaktoberfläche der Körner 1 untereinander mit der Schaltschwelle des Schutzelements 2 als Ganzes einen mathematisch erfaßbaren Zusammenhang aufweist und dadurch bei gewollter Schaltschwelle und vorgegebener Schichtdicke des Schutzelementes 2 die Größe der Körner 1 auf einfache Weise rechnerisch ermittelbar ist.

Der Hohlraum 12 einer derartigen Einheitszelle geht unmittelbar in die Menge der Befüllung des Schutzelementes 2 mit dem Elektrolyt der Einzelzelle 8 ein, wodurch die für eine Mindestfüllung benötigte Menge an Elektrolyt berechenbar ist. Dadurch kann z.B. überprüft werden, ob das in einer Einzelzelle 8 auch als Separator verwendbare und als Speichermedium für den Elektrolyt zur Verfügung stehende Schutzelement 2 hinreichend mit Elektrolyt befüllt ist.

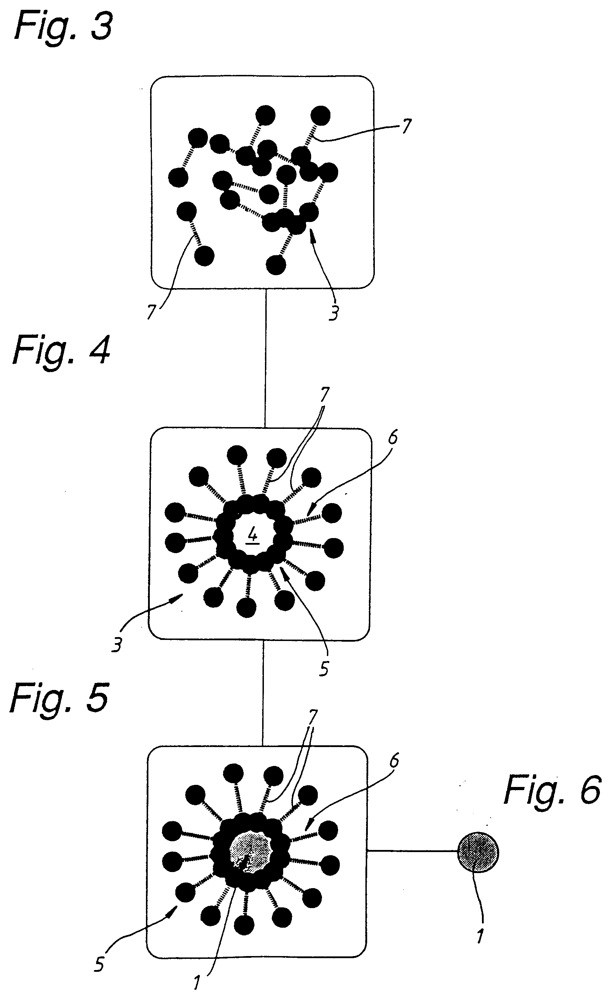

Im folgenden wird anhand der Figuren 3 bis 6 auf den prinzipiellen Ablauf des Verfahren zur Herstellung eines erfindungsgemäßen Schutzelements 2 unter Zuhilfenahme von Vesikeln als Hohlkörper eingegangen.

In Figur 3 ist eine Dispersion 3 dargestellt, die insbesondere aus einem Lösungsmittel und amphiphilen, organischen Molekülen 7 gebildet ist, wobei die Moleküle 7 in dem Lösungsmittel statistisch verteilt sind. Als Moleküle 7 werden zweckmäßigerweise Lipide und/oder Proteine, insbesondere Phospholipide, verwandt. In dem Lösungsmittel, das ja die flüssige Phase der Dispersion 3 darstellt, ist soviel von einem Salz gelöst als für eine optimale Bildung der Vesikel 5 und für die Herstellung der gewünschten Partikel unter den jeweiligen Bedingungen notwendig ist. Die Salzkonzentration liegt hierbei insbesondere im Bereich zwischen 0,1 M bis zur Sättigung. Als Salz wird ein Salz verwandt, das das Vorprodukt-Ion für die das Varistormaterial bildende Substanz als Kation aufweist. Das zur Bildung des Varistormaterials benötigte Vorprodukt-Ion kann ein Element oder eine entsprechende ionisierte Substanz bzw. Verbindung sein.

Wird die salzhaltige Dispersion 3, wie in Figur 4 dargestellt, stärkerem Ultraschall ausgesetzt, so bilden sich aus den Molekülen 7 kugelförmige Vesikel 5, die von einer Membran bzw. Hülle 6 begrenzt sind. Die Hülle 6 ist aus den Molekülen 7 gebildet. Innerhalb der Hülle 6 weisen die Vesikel 5 einen Hohlraum 4 auf, in dem Teile der flüssigen Phase der Dispersion 3 eingeschlossen sind. Die Größe der Vesikel 5 und damit der Hohlräume 4 ist durch die Randbedingungen und hierbei insbesondere durch die Wahl der Moleküle 7 einstellbar. Aufgrund dieses Umstandes können aus der Dispersion Vesikel 5 gebildet werden, die einen etwa gleichen, einstellbaren bekannten Innendurchmessers aufweisen, da der von der Hülle 6 umschlossene Hohlraum 4 der Vesikel 5 den maximalen Durchmesser der späteren Körner 1, wie sie in Figur 6 dargestellt sind, festlegt. Zur Herstellung der Vesikel 5 kann auch eine sogenannte "French Press", insbesondere in einer Ausführung bei der die Dispersion unter hohem Druck durch einen feinporigen Filter gepreßt wird, verwendet werden.

Nach Bildung der Vesikel 5 werden der flüssigen Phase der Dispersion 3 die Vorprodukt-Ionen mittels einer Ionenaustauschsäule entzogen. Trotz des sich daraufhin einstellenden und eine Diffusion fördernden Konzentrationsgefälles (hohe Konzentration von Vorprodukt-Ionen innerhalb der Hohlräume 4 der Vesikel 5 und vernachlässigbare bis keine Konzentration von Vorprodukt-Ionen außerhalb der Hohlräume 4) verbleiben hierbei die kationischen Vorprodukt-Ionen in den Hohlräumen 4, da sie die als doppellagige Membran ausgebildete Hülle 6 nicht durchdringen können. Nach der Entfernung der außerhalb der Hohlräume 4 befindlichen Vorprodukt-Ionen werden der flüssigen Phase der Dispersion 3 Anionen beigegeben. Die Anionen durchdringen die Hülle 6 der Vesikel 5 und reagieren nach erfolgter Diffusion in den jeweiligen Hohlräumen 4 der Vesikel 5 mit den darin befindlichen Vorprodukt-Ionen. Das Produkt dieser Reaktion ist das Vorprodukt des Varistormaterials (siehe Figur 5), das anschließend noch in das Varistormaterial überführt werden muß. Derartige Vorprodukte können bspw. Hydroxide sein, die noch durch geeignete und bekannte Verfahren wie Calzinieren oder dgl. in Oxide überführt werden.

Sinnvollerweise erfolgt die Umwandlung des Vorprodukts in das Varistormaterial gleichzeitig mit dem Entfernen der Hülle 6 des Vesikels 5, das sinnvollerweise thermisch vorgenommen wird. Bei dem thermischen Entfernen wird hierzu die Temperatur derart eingestellt, daß gleichzeitig mit der Entfernung der Hülle 6 eines Vesikels 5 das im Hohlraum 4 befindliche Vorprodukt calziniert wird und nur ein Korn 1 des Varistormaterials zurückbleibt.

Die Hüllen 6 der Vesikel 5 können auch auf schonende Weise entfernt werden, insbesondere durch ein geeignetes Lösungsmittel. Hierbei ist vor allem von Vorteil, daß dann die Moleküle 7 einer Wiederverwendung zugeführt werden können.

Die gewonnenen Körner 1 sind sich in den oben aufgeführten Grenzen ähnlich. Zur Formgebung des Schutzelements 2 werden die Körner 1 in eine Form überführt und entsprechend der Gestaltung des Schutzelements 2 miteinander verbunden.

Eine weitere Möglichkeit ist es, die Körner 1 in Form zu sintern. Das Sintern bietet hierbei den Vorteil, daß durch den thermischen Einfluß beim Sintern Fremdstoffe entfernt werden können. Insbesondere kann die thermische Einwirkung beim Sintern gleichzeitig zum Umwandeln des Vorproduktes in das Varistormaterial verwandt werden.

Als Salzkombination empfiehlt es sich, leicht lösliche Salze zur Herstellung der salzartigen Dispersion 3 zu verwenden. Die Einstrahlung bzw. Beschallung erfolgt günstigerweise im Bereich von 20 kHz, wobei die Schallintensität derart gering sein kann, daß sie praktisch nicht meßbar ist. Das Präzipitat wird durch Fällung der sich nach der Bildung der Vesikel 5 im Hohlraum 4 befindlichen Dispersion 3 mit einer Lösung eines Anions, das mit dem Vorprodukt-Ion einen schwerlöslichen Niederschlag bildet, erreicht.

## Patentansprüche

1. Schutzelement für einen elektrochemischen Speicher mit mindestens einer Einzelzelle, wobei die Einzelzelle zwei räumlich getrennte Elektroden aufweist, zwischen denen ein Elektrolyt und ein Schutzelement angeordnet ist, welches körperlich zwischen den Elektroden angeordnete Schutzelement den Abstand der Elektroden sichert, eine Überladung verhindert und aus körnigem Varistormaterial gebildet ist, und wobei sich das Schutzelement und die Elektroden in Elektrolyten befinden,
**dadurch gekennzeichnet,**
daß der mittlere Durchmesser der Körner (1) des Varistormaterials kleiner als 1 µm und daß bei über 60% der Körner (1) des Varistormaterials die Korngröße um maximal 40% von ihrem statistischen Mittelwert abweicht.

2. Schutzelement nach Anspruch 1,
**dadurch gekennzeichnet,**
daß der mittlere Durchmesser der Körner (1) des Varistormaterials kleiner 250 nm ist.

3. Schutzelement nach Anspruch 1,
**dadurch gekennzeichnet,**
daß das Schutzelement (2) als ein rahmenartiger und/oder gitterartiger Separator ausgebildet ist.

4. Schutzelement nach Anspruch 1,
**dadurch gekennzeichnet,**
daß das Schutzelement (2) porös ist.

5. Schutzelement nach Anspruch 1,
**dadurch gekennzeichnet,**
daß das Schutzelement (2) porös ist und daß in den Poren des Schutzelements Elektrolyt des elektrochemischen Speichers (9) angeordnet ist.

6. Verfahren zur Herstellung eines Schutzelementes aus körnigem Varistormaterial für Einzelzellen elektrochemischer Speicher, bei welchem Verfahren Körner geringen Durchmessers aus einem zur Bildung von Varistoren geeigneten Material hergestellt und zu einem Schutzelement gefügt werden,
**dadurch gekennzeichnet,**
- daß zur Herstellung der einen mittleren Durchmesser kleiner 1 µm aufweisenden Körner (1) aus einer Dispersion (3) Hohlräume (4) aufweisende biochemische Hohlkörper gebildet werden, die einen bekannten mittleren Innendurchmessers ihres jeweiligen Hohlraumes (4) aufweisen, der kleiner als 1 µm ist, wobei bei über 60% der Hohlkörper der Innendurchmesser um maximal 40% von ihrem statischen Mittelwert abweicht,
- daß vor der Bildung der Hohlkörper der Dispersion (3) Salze beigegeben werden, die in der Dispersion (3) unter Bildung von Vorprodukt-Ionen gelöst werden, wobei ein Vorprodukt-Ionen ein Ion eines das Varistormaterial bildenden Elements oder einer entsprechenden Verbindung ist,
- daß die Salze das Vorprodukt-Ion als Kation aufweisen,
- daß nach der Bildung der Hohlkörper der flüssigen Phase, also der außerhalb der Hohlräume (4) der Hohlkörper befindlichen Salzlösung die Vorprodukt-Ionen entzogen werden,
- daß der weitgehend von den Vorprodukt-Ionen freien Salzlösung Anionen beigegeben werden, die durch die Hülle (6) der Hohlkörper permeieren,
- daß bei Vorliegen der Anionen im Hohlraum (4) der Hohlkörper die Präzipitation des hinsichtlich der Körner (1) formentsprechenden Vorprodukts des Varistormaterials ausgelöst wird,
- daß nach der Bildung des Vorprodukts die Hülle (6) der Hohlkörper entfernt wird, und
- daß das Vorprodukt zu dem Varistormaterial calziniert wird.

7. Verfahren nach Anspruch 6,
**dadurch gekennzeichnet,**
daß die Calzinierung des Vorprodukts zu den Körnern (1) aus Varistormaterial gleichzeitig mit der Entfernung der Hüllen (6) vorgenommen wird.

8. Verfahren nach Anspruch 6,
**dadurch gekennzeichnet,**
daß als Vesikel (5) eingesetzte Hohlkörper durch Lösen von amphiphilen, organischen Molekülen (7) in einer Flüssigkeit zu der Dispersion (3) und durch Beschallung der Dispersion (3) mit Ultraschall erzeugt werden, wobei die Parameter der Beschallung so gewählt sind, daß Vesikel (5) der angegebenen Größe gebildet werden.

9. Verfahren nach Anspruch 6,
**dadurch gekennzeichnet,**
daß die Hohlkörper durch Vesikel (5) gebildet werden, die selbst durch Lösen von amphiphilen, organischen Moleküle (7) in einer Flüssigkeit zu der Dispersion (3) und durch Beschallung mit Ultraschall hergestellt werden.

10. Verfahren nach Anspruch 6,
**dadurch gekennzeichnet,**
daß zur Bildung der Dispersion (3) der Flüssigkeit als Moleküle (7) Lipide und/oder Proteine beigegeben werden.

11. Verfahren nach Anspruch 6,
**dadurch gekennzeichnet,**
daß zur Bildung der Dispersion (3) der Flüssigkeit als Moleküle (7) Phospholipide beigegeben werden.

12. Verfahren nach Anspruch 6,
**dadurch gekennzeichnet,**
daß die Dispersion (3) auf einen pH-Wert ungleich 7 eingestellt wird.

13. Verfahren nach Anspruch 6,
**dadurch gekennzeichnet,**
daß die Konzentration der mit Salzen des Vorprodukt-Ions versetzen Dispersion (3) größer als 0,1 M eingestellt wird.

14. Verfahren nach Anspruch 6,
**dadurch gekennzeichnet,**
daß die Dispersion (3) mit den das Vorprodukt-Ion bildenden Salzen gesättigt wird.

15. Verfahren nach Anspruch 6,
**dadurch gekennzeichnet,**
daß als biochemikalische Hohlkörper Micellen, Mikroemulsionen, Ferritin oder dgl., insbesondere Vesikel (5) gewählt werden.

16. Verfahren nach Anspruch 6,
**dadurch gekennzeichnet,**
daß nach der Bildung des Vorprodukts die Hülle (6) der Hohlkörper thermisch entfernt wird.
